# EUROPEAN PATENT APPLICATION

(11) **EP 4 734 586 A1**
(43) Date of publication of application: **29.04.2026**
(21) Application number: 23941935.1
(22) Date of filing: 21.06.2023
(51) Int. Cl.: H04W 24/02, H04W 74/08, G01S 19/13

(54) **GNSS-BASED COMMUNICATION METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/101723
(87) International publication number: WO 2024/259633

(57) **Abstract**

The embodiments of the present disclosure provide a GNSS-based communication method and apparatus, and a communication device, a communication system and a storage medium. The method comprises: indicating the result of a terminal autonomously executing GNSS measurement. By means of the technical solution provided in the embodiments of the present disclosure, a terminal and a network device can agree on a GNSS measurement result.

## Description

### FIELD

The present invention relates to the field of communication technology, and in particular to a communication method and apparatus based on a global navigation satellite system (GNSS), a communication device, a communication system and a storage medium.

### BACKGROUND

In the field of communication technology, satellite communication may serve as a supplement to cellular communication. With the development of communication technology, the integration of satellite communication and cellular communication will gradually deepen. In satellite communication, in a case where a terminal autonomously performs a GNSS measurement, the terminal and the network device cannot reach a consensus on the result of the GNSS measurement.

### SUMMARY

In satellite communication, for a case where a terminal autonomously performs a GNSS measurement, the terminal and the network device need to reach a consensus on the result of the GNSS measurement.

Embodiments of the present invention provide a communication method and apparatus based on a GNSS, a communication device, a communication system and a storage medium.

According to a first aspect of embodiments of the present invention, there is provided a communication method based on a GNSS. The method is performed by a terminal. The method includes: indicating a result of a GNSS measurement autonomously performed by the terminal.

According to a second aspect of embodiments of the present invention, there is provided a communication method based on a GNSS. The method is performed by a network device. The method includes: obtaining a result of a GNSS measurement autonomously performed by a terminal.

According to a third aspect of embodiments of the present invention, there is provided a communication apparatus based on a GNSS. The apparatus is set in a terminal. The apparatus includes: an indication module. The indication module is configured to indicate a result of a GNSS measurement autonomously performed by the terminal.

According to a fourth aspect of embodiments of the present invention, there is provided a communication apparatus based on a GNSS. The apparatus is set in a network device. The apparatus includes: an obtaining module. The obtaining module is configured to obtain a result of a GNSS measurement autonomously performed by a terminal.

According to a fifth aspect of embodiments of the present invention, there is provided a communication device. The communication device includes: at least one processor, configured to call instructions to perform the communication method as described in the first aspect or the second aspect.

According to a sixth aspect of embodiments of the present invention, there is provided a communication system. The communication system includes: a terminal and a network device. The terminal is configured to perform the communication method as described in the first aspect. The network device is configured to perform the communication method as described in the second aspect.

According to a seventh aspect of embodiments of the present invention, there is provided a storage medium. The storage medium has stored therein instructions. The instructions, when executed by a processor, cause the communication method as described in the first aspect or the second aspect to be performed.

According to an eighth aspect of embodiments of the present invention, there is provided a computer program or a computer program product. The computer program or the computer program product includes codes. When the instructions are executed by a processor, the communication method as described in the first aspect or the second aspect is performed.

The technical solutions according to embodiments of the present invention enable the terminal and the network device to reach a consensus on the result of the GNSS measurement autonomously performed by the terminal.

It should be understood that the above general description and the following detailed description are illustrative and explanatory, and do not constitute limitations on embodiments of the present invention.

### BRIEF DESCRIPTION OF THE DRAWINGS

The accompanying drawings herein, which are incorporated in and constitute a part of this specification, illustrate embodiments consistent with the present invention and, together with the description, serve to explain the principles of the present invention.
FIG. 1 is a schematic diagram showing an architecture of a communication system according to embodiments of the present invention.
FIG. 2 is a schematic interactive diagram of a communication method based on a GNSS according to embodiments of the present invention.
FIG. 3A is a schematic diagram of a first example of a reporting position of a GNSS measurement according to embodiments of the present invention.
FIG. 3B is a schematic diagram of a second example of a reporting position of a GNSS measurement according to embodiments of the present invention.
FIG. 3C is a schematic diagram of a third example of a reporting position of a GNSS measurement according to embodiments of the present invention.
FIG. 4 is a schematic flowchart of a communication method based on a GNSS according to embodiments of the present invention.
FIG. 5 is a schematic flowchart of a communication method based on a GNSS according to embodiments of the present invention.
FIG. 6 is a schematic interactive diagram of a communication method based on a GNSS according to embodiments of the present invention.
FIG. 7 is a schematic interactive diagram of a communication method based on a GNSS according to embodiments of the present invention.
FIG. 8 is a schematic interactive diagram of a communication method based on a GNSS according to embodiments of the present invention.
FIG. 9 is a schematic flowchart of a communication method based on a GNSS according to embodiments of the present invention.
FIG. 10 is a schematic diagram of a communication apparatus based on a GNSS according to embodiments of the present invention.
FIG. 11 is a schematic diagram of a communication apparatus based on a GNSS according to embodiments of the present invention.
FIG. 12 is a schematic diagram of a terminal according to embodiments of the present invention.

### DETAILED DESCRIPTION

Embodiments of the present invention provide a communication method and apparatus based on a GNSS, a communication device, a communication system, and a storage medium.

In a first aspect, embodiments of the present invention provide a communication method based on a GNSS. The method is performed by a terminal. The method includes: indicating a result of a GNSS measurement autonomously performed by the terminal.

In above embodiments, after the terminal autonomously performs the GNSS measurement, the terminal may indicate the result of the GNSS measurement to enable a network device to obtain the result of the GNSS measurement. In this way, the terminal and the network device reach a consensus on the result of the GNSS measurement autonomously performed by the terminal, avoiding information inconsistency between the terminal and the network device.

In combination with some embodiments of the first aspect, in some embodiments, the operation of indicating the result of the GNSS measurement autonomously performed by the terminal may include sending first information, and the first information indicates the result of the GNSS measurement autonomously performed by the terminal.

In above embodiments, the terminal may indicate the result of the GNSS measurement autonomously performed by the terminal to the network device by sending the first information to the network device. In this way, in the case where the terminal performs the GNSS measurement autonomously, the network device is able to obtain the result of the GNSS measurement timely and clearly through the first information.

In combination with some embodiments of the first aspect, in some embodiments, the first information may be GNSS measurement result information. The GNSS measurement result information may have a first value, and indicate that the GNSS measurement autonomously performed by the terminal succeeds; or the GNSS measurement result information may have a second value, and indicate that the GNSS measurement autonomously performed by the terminal fails.

In above embodiments, based on the GNSS measurement result information, the network device clearly obtains the result of the GNSS measurement autonomously performed by the terminal.

In combination with some embodiments of the first aspect, in some embodiments, the first information may be GNSS validity duration information, and the GNSS validity duration information indicates a GNSS validity duration determined based on the GNSS measurement.

In above embodiments, by carrying the GNSS validity duration information in the first information, the terminal informs the network device of the GNSS validity duration obtained by the GNSS measurement. In addition, in a case where the first information does not contain the GNSS measurement result information, the terminal may use the GNSS validity duration information to indicate the result of the GNSS measurement autonomously performed by the terminal.

In combination with some embodiments of the first aspect, in some embodiments, in a case where a variation of a GNSS validity duration determined based on the GNSS measurement relative to a GNSS validity duration determined based on a previous GNSS measurement is less than a first threshold, the first information is measurement result information of the GNSS measurement (i.e., GNSS measurement result information); in a case where a variation of a GNSS validity duration determined based on the GNSS measurement relative to a GNSS validity duration determined based on a previous GNSS measurement is greater than or equal to a first threshold, the first information is GNSS validity duration information, and the GNSS validity duration information indicates the GNSS validity duration determined based on the GNSS measurement.

In above embodiments, in a case where two GNSS validity durations obtained by the terminal through two adjacent GNSS measurements are the same or do not change much, the result of the GNSS measurement may be indicated by the GNSS measurement result information. In this way, the indication of the result of the GNSS measurement is achievable with less data. Further, in a case where two GNSS validity durations obtained by the terminal through two adjacent GNSS measurements change greatly, the GNSS validity duration may be indicated by the GNSS validity duration information. In this way, the network device can, according to the GNSS validity duration information, not only determine that the GNSS measurement succeeds, but also obtain the changed GNSS validity duration.

In combination with some embodiments of the first aspect, in some embodiments, the first information may be carried on a physical random access channel (PRACH).

In above embodiments, the terminal may send the first information to the network device via the PRACH, thereby indicating the result of the GNSS measurement autonomously performed by the terminal via the control layer.

In combination with some embodiments of the first aspect, in some embodiments, the operation of indicating the result of the GNSS measurement autonomously performed by the terminal may include: not sending the first information, indicating that the GNSS measurement autonomously performed by the terminal fails.

In above embodiments, in a case where the GNSS measurement autonomously performed by the terminal fails, the terminal may choose not to send the first information. In this way, the network device will not receive the first information from the terminal, and the network device may consider that the GNSS measurement autonomously performed by the terminal turns out to be failed.

In combination with some embodiments of the first aspect, in some embodiments, before indicating the result of the GNSS measurement autonomously performed by the terminal, the method may further include: autonomously performing the GNSS measurement within a first duration.

In above embodiments, the terminal autonomously performs the GNSS measurement within the first duration. In this way, the result of the GNSS measurement may be obtained at or before the end of the first duration, and the network device may be informed in time.

In combination with some embodiments of the first aspect, in some embodiments, the operation of indicating the result of the GNSS measurement autonomously performed by the terminal may include at least one of: indicating the result of the GNSS measurement autonomously performed by the terminal, at an end of a second duration which starts from an end moment of the first duration; indicating the result of the GNSS measurement autonomously performed by the terminal, within a third duration which starts from an end moment of the first duration; or indicating the result of the GNSS measurement autonomously performed by the terminal, within a fourth duration which starts from a moment when the GNSS measurement succeeds.

In above embodiments, the terminal may use different time-domain positions to indicate the result of the GNSS measurement autonomously performed. That is, for different situations and requirements, the terminal may use different time-domain positions to indicate the result of the GNSS measurement. In this way, the indication may be performed by the terminal with improved flexibility.

In combination with some embodiments of the first aspect, in some embodiments, the above method may also include: starting a timer and performing the GNSS measurement after a GNSS validity duration expires, in a case where no second information is received until the end of the GNSS validity duration. The second information is used to trigger the terminal to perform the GNSS measurement, and the timer has the first duration.

In above embodiments, in a case the second information is not received, the terminal may determine to autonomously perform the GNSS measurement upon expiration of the GNSS validity duration. In this way, the terminal may autonomously perform the GNSS measurement and report the result of the GNSS measurement timely, without having to wait for an excessively long time.

In combination with some embodiments of the first aspect, in some embodiments, before starting the timer and performing the GNSS measurement, the method may include: receiving third information, and the third information indicates that the terminal is allowed to autonomously perform the GNSS measurement.

In above embodiments, the network device may indicate, through the third information, that the terminal is allowed to autonomously perform the GNSS measurement.

In a second aspect, embodiments of the present invention provide a communication method based on a GNSS. The method is performed by a network device. The method includes: obtaining a result of a GNSS measurement autonomously performed by a terminal.

In combination with some embodiments of the second aspect, in some embodiments, the operation of obtaining the result of the GNSS measurement autonomously performed by the terminal may include: receiving first information for indicating the result of the GNSS measurement autonomously performed by the terminal; and determining the result of the GNSS measurement autonomously performed by the terminal according to the first information.

In combination with some embodiments of the second aspect, in some embodiments, the first information may be GNSS measurement result information. The GNSS measurement result information may have a first value, and indicate that the GNSS measurement autonomously performed by the terminal succeeds; or the GNSS measurement result information may have a second value, and indicate that the GNSS measurement autonomously performed by the terminal fails.

In combination with some embodiments of the second aspect, in some embodiments, the operation of determining the result of the GNSS measurement autonomously performed by the terminal according to the first information may include: determining that the GNSS measurement autonomously performed by the terminal succeeds, in a case where the GNSS measurement result information has the first value; determining that the GNSS measurement autonomously performed by the terminal fails, in a case where the GNSS measurement result information has the second value.

In combination with some embodiments of the second aspect, in some embodiments, the first information may be GNSS validity duration information, and the GNSS validity duration information indicates a GNSS validity duration determined based on the GNSS measurement.

In combination with some embodiments of the second aspect, in some embodiments, the operation of determining the result of the GNSS measurement autonomously performed by the terminal according to the first information may include: determining that the GNSS measurement autonomously performed by the terminal succeeds, in a case where the GNSS validity duration information is received.

In combination with some embodiments of the second aspect, in some embodiments, the operation of determining the result of the GNSS measurement autonomously performed by the terminal according to the first information may further include: determining that the GNSS measurement autonomously performed by the terminal fails, in a case where the GNSS validity duration is less than a second threshold; determining that the GNSS measurement autonomously performed by the terminal succeeds, in a case where the GNSS validity duration is greater than or equal to a second threshold.

In combination with some embodiments of the second aspect, in some embodiments, the first information may be carried on a PRACH.

In combination with some embodiments of the second aspect, in some embodiments, the operation of obtaining the result of the GNSS measurement autonomously performed by the terminal may include: determining that the GNSS measurement autonomously performed by the terminal fails, in a case where first information is not received.

In combination with some embodiments of the second aspect, in some embodiments, before obtaining the result of the GNSS measurement autonomously performed by the terminal, the method may further include: sending third information, and the third information indicates that the terminal is allowed to autonomously perform the GNSS measurement.

In a third aspect, embodiments of the present invention provide a communication apparatus based on a GNSS. The apparatus is set in a terminal. The apparatus includes: an indication module. The indication module is configured to indicate a result of a GNSS measurement autonomously performed by the terminal.

In combination with some embodiments of the third aspect, in some embodiments, the indication module may be configured to send first information, and the first information indicates the result of the GNSS measurement autonomously performed by the terminal.

In combination with some embodiments of the third aspect, in some embodiments, the first information may be GNSS measurement result information. The GNSS measurement result information may have a first value, and indicate that the GNSS measurement autonomously performed by the terminal succeeds; or the GNSS measurement result information may have a second value, and indicate that the GNSS measurement autonomously performed by the terminal fails.

In combination with some embodiments of the third aspect, in some embodiments, the first information may be GNSS validity duration information, and the GNSS validity duration information indicates a GNSS validity duration determined based on the GNSS measurement.

In combination with some embodiments of the third aspect, in some embodiments, in a case where a variation of a GNSS validity duration determined based on the GNSS measurement relative to a GNSS validity duration determined based on a previous GNSS measurement is less than a first threshold, the first information is GNSS measurement result information; in a case where a variation of a GNSS validity duration determined based on the GNSS measurement relative to a GNSS validity duration determined based on a previous GNSS measurement is greater than or equal to a first threshold, the first information is GNSS validity duration information, and the GNSS validity duration information indicates the GNSS validity duration determined based on the GNSS measurement.

In combination with some embodiments of the third aspect, in some embodiments, the first information may be carried on a PRACH.

In combination with some embodiments of the third aspect, in some embodiments, the indication module may be configured not to send the first information, indicating that the GNSS measurement autonomously performed by the terminal fails.

In combination with some embodiments of the third aspect, in some embodiments, the apparatus may further include a processing module. The processing module is configured to autonomously perform the GNSS measurement within a first duration.

In combination with some embodiments of the third aspect, in some embodiments, the indication module may be configured to perform at least one of: indicating the result of the GNSS measurement autonomously performed by the terminal, at an end of a second duration which starts from an end moment of the first duration; indicating the result of the GNSS measurement autonomously performed by the terminal, within a third duration which starts from an end moment of the first duration; or indicating the result of the GNSS measurement autonomously performed by the terminal, within a fourth duration which starts from a moment when the GNSS measurement succeeds.

In combination with some embodiments of the third aspect, in some embodiments, the processing module may be configured to: start a timer and perform the GNSS measurement after a GNSS validity duration expires, in a case where no second information is received until the end of the GNSS validity duration. The second information is used to trigger the terminal to perform the GNSS measurement, and the timer has the first duration.

In combination with some embodiments of the third aspect, in some embodiments, the apparatus may further include a receiving module. The receiving module is configured to receive third information, and the third information indicates that the terminal is allowed to autonomously perform the GNSS measurement.

In a fourth aspect, embodiments of the present invention provide a communication apparatus based on a GNSS. The apparatus is set in a network device. The apparatus includes: an obtaining module. The obtaining module is configured to obtain a result of a GNSS measurement autonomously performed by a terminal.

In combination with some embodiments of the fourth aspect, in some embodiments, the obtaining module may be configured to: receive first information for indicating the result of the GNSS measurement autonomously performed by the terminal; and determine the result of the GNSS measurement autonomously performed by the terminal according to the first information.

In combination with some embodiments of the fourth aspect, in some embodiments, the first information may be GNSS measurement result information. The GNSS measurement result information may have a first value, and indicate that the GNSS measurement autonomously performed by the terminal succeeds; or the GNSS measurement result information may have a second value, and indicate that the GNSS measurement autonomously performed by the terminal fails.

In combination with some embodiments of the fourth aspect, in some embodiments, the obtaining module may be configured to: determine that the GNSS measurement autonomously performed by the terminal succeeds, in a case where the GNSS measurement result information has the first value; determine that the GNSS measurement autonomously performed by the terminal fails, in a case where the GNSS measurement result information has the second value.

In combination with some embodiments of the fourth aspect, in some embodiments, the first information may be GNSS validity duration information, and the GNSS validity duration information indicates a GNSS validity duration determined based on the GNSS measurement.

In combination with some embodiments of the fourth aspect, in some embodiments, the obtaining module may be configured to: determine that the GNSS measurement autonomously performed by the terminal succeeds, in a case where the GNSS validity duration information is received.

In combination with some embodiments of the fourth aspect, in some embodiments, the obtaining module may be configured to: determine that the GNSS measurement autonomously performed by the terminal fails, in a case where the GNSS validity duration is less than a second threshold; determine that the GNSS measurement autonomously performed by the terminal succeeds, in a case where the GNSS validity duration is greater than or equal to a second threshold.

In combination with some embodiments of the fourth aspect, in some embodiments, the first information may be carried on a PRACH.

In combination with some embodiments of the fourth aspect, in some embodiments, the obtaining module may be configured to: determine that the GNSS measurement autonomously performed by the terminal fails, in a case where first information is not received.

In combination with some embodiments of the fourth aspect, in some embodiments, the apparatus may further include: a sending module. The sending module may be configured to send third information, and the third information indicates that the terminal is allowed to autonomously perform the GNSS measurement.

In a fifth aspect, embodiments of the present invention provide a communication device. The communication device includes at least one processor. The processor is configured to call instructions to perform the communication method as described in the second aspect as well as in any embodiment of the second aspect.

In a sixth aspect, embodiments of the present invention provide a communication system. The communication system includes a terminal and a network device. The terminal is configured to perform the communication method as described in the first aspect as well as in any embodiment of the first aspect. The network device is configured to perform the communication method as described in the second aspect as well as in any embodiment of the second aspect.

In a seventh aspect, embodiments of the present invention provide a storage medium. The storage medium has stored therein instructions. When the instructions are executed by a processor, the communication method as described in the first aspect, the second aspect or any embodiment thereof is performed.

In an eighth aspect, a computer program or a computer program product is provided. The computer program or the computer program product includes codes. When instructions are executed by a processor, the communication method as described in the first aspect, the second aspect or any embodiment thereof is performed.

It is understandable that the communication apparatus based on the GNSS, the terminal, the network device, the communication system, the storage medium, the computer program, and the computer program product as described above are all used for implementation of the method as described in embodiments of the present invention. Therefore, the beneficial effects achievable thereby can refer to the beneficial effects in the corresponding method, and will not be repeated here.

Embodiments of the present invention provide a communication method and apparatus based on a GNSS, a communication device, a communication system and a storage medium. In some embodiments, terms such as "communication method", "information processing method", "information transmission method" or the like are interchangeable; terms such as "communication apparatus", "information processing apparatus", "information transmission apparatus" or the like are interchangeable; and terms such as "communication system", "information processing system" or the like are interchangeable.

Embodiments of the present invention are not exhaustive, but are examples of some embodiments, and are not intended to constitute a limitation on the scope of protection of the present invention. In the absence of contradiction, each step in a certain embodiment may be implemented as an independent embodiment, and individual steps may be arbitrarily combined. For example, a solution obtained after removing one or more steps from a certain embodiment may also be implemented as an independent embodiment, and steps in a certain embodiment may be arbitrarily exchanged in order. In addition, optional implementation manners in a certain embodiment may be arbitrarily combined. In addition, various embodiments may be arbitrarily combined, for example, some or all of the steps of different embodiments may be arbitrarily combined, and a certain embodiment may be arbitrarily combined with an optional implementation manner of other embodiments.

In various embodiments of the present invention, unless specified otherwise or there is a logical conflict, terms and/or descriptions among various embodiments are of consistency and may be referenced to each other, and technical features in different embodiments may be combined to form new embodiments based on their internal logical relationships.

Terms used in embodiments of the present invention are for the purpose of describing specific embodiments and are not intended to limit the present invention.

In embodiments of the present invention, unless specified otherwise, an element expressed in the singular form, such as expressed with words like "a", "an", "the", "described above", "said", "aforementioned", "this", etc., may mean "one and only one", or mean "one or more", "at least one", etc. For example, where articles such as "a", "an", "the" used in English are used in translation, the noun after the article may be understood as a singular expression or a plural expression.

In embodiments of the present invention, "a plurality of" refers to two or more.

In some embodiments, phrases like "at least one of", "at least one", "one or more", "a plurality of", "multiple", etc. may be used interchangeably.

In some embodiments, expressions such as "at least one of A and B", "A and/or B", "A in a case, B in another case", "A in a situation, B in another situation", etc., may include the following technical solutions depending on circumstances: in some embodiments, A (A is executed independently of B); in some embodiments, B (B is executed independently of A); in some embodiments, execution is selected from A and B (A and B are selectively executed); in some embodiments, A and B (both A and B are executed). Similar principles apply when there are more branches, such as A, B, C, etc.

In some embodiments, the expression like "A or B" may include the following technical solutions depending on circumstances: in some embodiments, A (A is executed independently of B); in some embodiments, B (B is executed independently of A); in some embodiments, execution is selected from A and B (A and B are selectively executed). Similar principles apply when there are more branches, such as A, B, C, etc.

The prefixes such as "first" and "second" in embodiments of the present invention are used to distinguish different objects described, and do not constitute restrictions on the position, order, priority, quantity or content of the described objects. The statement for the described objects refers to the description in the context of the claims or embodiments, and the use of prefixes should not bring unnecessary restrictions. For example, if the described objects are "fields", such as "first field" and "second field", the ordinal numbers, i.e., "first" and "second", before these "fields" do not limit positions or order of these "fields", and the "first" and "second" do not limit whether the "fields" they define are in the same message, nor do they limit the order of the "first field" and the "second field". For another example, if the described objects are "levels", such as "first level" and "second level", the ordinal numbers before these "levels" do not limit the priority between these "levels". For another example, the number of the described object is not limited by the ordinal number, the number of the described object may be one or more. Taking "first apparatus" as an example, the number of the "apparatus" may be one or more. In addition, the objects defined by different prefixes may be the same or different. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their contents may be the same or different.

In some embodiments, "including A", "comprising A", "indicating A", and "carrying A" may be interpreted as directly carrying A or indirectly indicating A.

In some embodiments, phrases such as "in response to...", "in response to determining...", "in a case where...", "upon...", "when...", "in case of...", "if..." or the like may be used interchangeably.

In some embodiments, terms such as "greater than", "greater than or equal to", "not less than", "more than", "more than or equal to", "not less than", "higher than", "higher than or equal to", "not lower than", and "above" are interchangeable, and terms such as "smaller than", "smaller than or equal to", "not greater than", "less than", "less than or equal to", "no more than", "lower than", "lower than or equal to", "not higher than", and "below" are interchangeable.

In some embodiments, apparatuses or the like may be interpreted as physical or virtual, and their names are not limited to those recorded in embodiments, and terms such as "apparatus", "equipment", "device", "circuit", "network element", "node", "function", "unit", "section", "system", "network", "chip", "chip system", "entity", and "body" may be used interchangeably.

In some embodiments, the term "network" may be interpreted as devices contained within the network (e.g., access network device, core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel (panel)", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, terms such as "terminal", "terminal device", "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, the communication between a terminal and an access network device, a core network device or a network device may be replaced by the communication structure among terminals (may also be referred to as for example device-to-device (D2D), vehicle-to-everything (V2X), etc.), which may also apply various embodiments of the present invention. In this case, a structure may be set in which the terminal has all or part of functions of the access network device. In addition, terms such as "uplink" and "downlink" may also be replaced by a term (e.g., "side") corresponding to the communication among terminals. For example, an uplink channel, a downlink channel, etc. may be replaced by a side channel, and an uplink, a downlink, etc. may be replaced by a sidelink.

In some embodiments, a terminal may be replaced by an access network device, a core network device, or a network device. In this case, a structure may be set in which the access network device, the core network device, or the network device has all or part of functions of the terminal.

In some embodiments, acquisition of data, information, etc. may comply with the laws and regulations of the country where the activity takes place.

In some embodiments, data, information, etc., may be obtained with the user's consent.

In addition, each element, each row, or each column in the table of embodiments of the present invention may be implemented as an independent embodiment, and the combination of any element, any row, and/or any column may also be implemented as an independent embodiment.

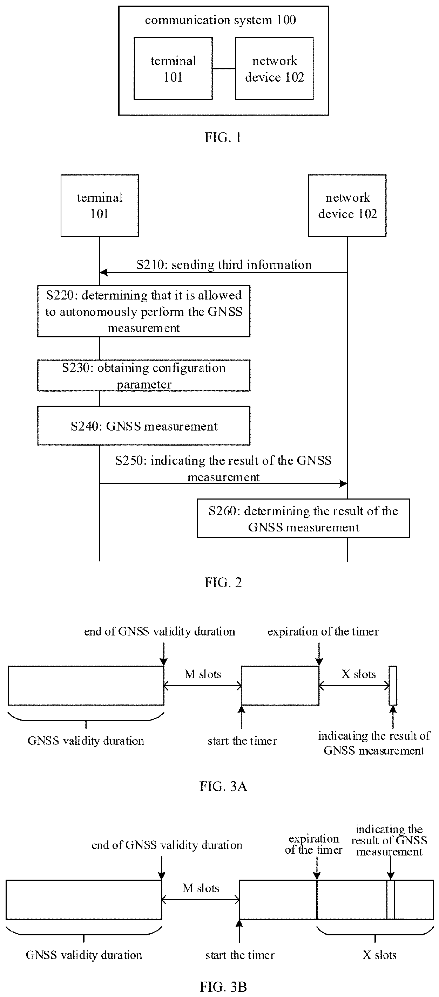

FIG. 1 is a schematic diagram showing an architecture of a communication system according to embodiments of the present invention. As shown in FIG. 1, the communication system 100 includes a terminal 101 and a network device 102.

In some embodiments, the terminal 101 includes, for example, at least one of a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in a smart home, but is not limited thereto.

In some embodiments, the network device 102 may include an access network device and/or a core network device. In some embodiments, the network device 102 may be for example a node or device that connects a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), or a mobile switching center in a 5G communication system, a base station, an open base station (Open RAN), or a cloud base station (Cloud RAN) in a 6G communication system, a base station in other communication systems, or an access node in a Wi-Fi system, but is not limited thereto.

In some embodiments, the technical solutions of the present invention are applicable to the Open RAN architecture. In this case, interfaces within the network device involved in embodiments of the present invention may be internal interfaces of the Open RAN, and the processes and information exchange between these internal interfaces may be implemented through software or programs.

In some embodiments, the network device may be composed of a central unit (CU) and distributed units (DUs), where the CU may also be referred to as a control unit. The CU-DU structure allows to split protocol layers of the network device, functions of some protocol layers are set in the CU for centralized control, functions of some or all of the remaining protocol layers are distributed in DUs, and the DUs are centrally controlled by the CU, but the present invention is not limited thereto.

It may be understood that the communication system described in embodiments of the present invention is for the purpose of more clearly illustrating the technical solutions of embodiments of the present invention, and does not constitute a limitation on the technical solutions proposed in embodiments of the present invention. A person of ordinary skill in the art knows that with the evolution of the system architecture and the emergence of new service scenarios, the technical solutions proposed in embodiments of the present invention are also applicable to similar technical problems.

The following embodiments of the present invention may be applied to the communication system 100 or some of entities shown in FIG. 1, but are not limited thereto. The entities shown in FIG. 1 are examples, and the communication system may include all or part of the entities in FIG. 1, or may include other entities not shown in FIG. 1, and the number and form of each kind of entity are arbitrary, and the connection relationship among the entities is an example, and these entities may be connected or disconnected with each other, and the connection may be in any manner, either a direct connection or an indirect connection, or either a wired connection or a wireless connection.

Various embodiments of the present invention may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems expanded based thereon, etc. In addition, multiple systems may also be combined (for example, a combination of LTE or LTE-A and 5G) for application.

In the field of communication technology, satellite communication may serve as a supplement to cellular communication. With the development of communication technology, the integration between satellite communication and cellular communication will gradually deepen.

In some embodiments, a terminal may determine its own location information through a GNSS measurement, so as to determine timing compensation for an uplink transmission. After obtaining a result of the GNSS measurement, the terminal may indicate a GNSS validity duration to a network device. When the GNSS validity duration ends (or called expiration), or after a period of time after the GNSS validity duration ends, if the terminal has not obtained validity location information determined by GNSS measurement, the terminal will enter an idle state. The process where the terminal enters the idle state and re-obtains the GNSS validity duration will cause a certain delay.

In some embodiments, after the GNSS validity duration of the terminal expires, if no triggering instruction for triggering the GNSS measurement is received from the network device, the terminal may autonomously perform the GNSS measurement. However, although the terminal may autonomously perform the GNSS measurement, the network device does not know the result of the GNSS measurement. This results in the terminal and the network device being unable to reach a consensus on the result of the GNSS measurement.

FIG. 2 is a schematic interactive diagram of a communication method based on a GNSS according to embodiments of the present invention. Embodiments of the present invention relate to a communication method based on a GNSS, which is applied to a communication system 100. As shown in FIG. 2, the method includes steps S210 to S250.

In step S210, a network device 102 sends third information to a terminal 101.

In some embodiments, the terminal 101 may receive the third information.

In some embodiments, the third information may indicate that the terminal 101 is allowed to autonomously perform a GNSS measurement.

In some embodiments, the name of the third information is not limited. For example, the third information may be configuration information, etc.

In some embodiments, the third information may include indication information. In an example, in a case where the indication information has a first value, the third information may indicate that the terminal 101 is allowed to autonomously perform the GNSS measurement. In an example, in a case where the indication information has a second value, the third information may indicate that the terminal 101 is not allowed to autonomously perform the GNSS measurement. For example, the indication information may have 1 bit. In a case where the indication information is "1", the third information may indicate that the terminal 101 is allowed to autonomously perform the GNSS measurement; or in a case where the indication information is "0", the third information may indicate that the terminal 101 is allowed to autonomously perform the GNSS measurement.

In some embodiments, the third information may include a configuration parameter. The configuration parameter may be a parameter related to the GNSS measurement autonomously performed by the terminal 101.

In some embodiments, the configuration parameter may include at least one of: a mode parameter, or a time parameter. The mode parameter may indicate a mode in which the terminal 101 autonomously performs the GNSS measurement. The time parameter may include time information for the terminal 101 to autonomously perform the GNSS measurement.

In some embodiments, the mode parameter may include at least one of: a first mode indication, a second mode indication, or a third mode indication. The first mode indication, the second mode indication, and the third mode indication may indicate a first mode, a second mode, and a third mode, respectively.

In some embodiments, the time parameter may include at least one of: a first duration, a second duration, a third duration, a fourth duration, a fifth duration, or a sixth duration.

In some embodiments, the first duration may be a duration of a timer of the terminal 101.

In some embodiments, the timer may be a GNSS measurement timer. The timer may be used to time the GNSS measurement autonomously performed by the terminal 101. In other words, within the first duration, the terminal 101 may autonomously perform the GNSS measurement.

In some embodiments, the second duration may be a time parameter associated with the first mode.

In some embodiments, the third duration may be a time parameter associated with the second mode.

In some embodiments, the fourth duration may be a time parameter associated with the third mode.

In some embodiments, the fifth duration may be a duration from the end of the GNSS validity duration of the terminal 101 to a moment when the terminal 101 starts the timer.

In some embodiments, the time parameter may also include start time information for the terminal to autonomously perform the GNSS measurement. The start time information may indicate a time position at which the terminal 101 starts to perform the GNSS measurement. In an example, the start time information may indicate a time position at which the GNSS validity duration ends. In an embodiment, the start time information may indicate a time position that is spaced by a certain duration after a time position at which the GNSS validity duration ends.

In some embodiments, the start time information may include the sixth duration. The sixth duration may be a duration from the end of the GNSS validity duration of the terminal 101 to a moment when the terminal 101 starts to perform the GNSS measurement.

In some embodiments, the sixth duration may be greater than or equal to the fifth duration.

In some embodiments, the fifth duration may be equal to the sixth duration. This means that the terminal 101 may start the timer and perform the GNSS measurement at the same time.

In some embodiments, the fifth duration may be unequal to the sixth duration. This means that the terminal 101 may perform the GNSS measurement after starting the timer.

In some embodiments, the fifth duration may be equal to the sixth duration, the configuration parameter may include the fifth duration, and the fifth duration or the sixth duration may indicate both the duration from the end of the GNSS validity duration of the terminal 101 to the moment when the terminal 101 starts the timer and the duration from the end of the GNSS validity duration of the terminal 101 to the moment when the terminal 101 starts to perform the GNSS measurement.

In some embodiments, at least one of the first duration, the second duration, the third duration, the fourth duration, the fifth duration, or the sixth duration may be in a logical time unit. For example, the logical time unit may include a symbol, a frame, a subframe, a slot, etc.

In some embodiments, at least one of the first duration, the second duration, the third duration, the fourth duration, the fifth duration, or the sixth duration may be in a natural time unit. For example, the natural time unit may include a second, a microsecond, a millisecond, a femtosecond, a picosecond, etc.

In some embodiments, the configuration parameter may include the mode parameter. For example, the configuration parameter may include the first mode indication. For example, the configuration parameter may include the second mode indication. For example, the configuration parameter may include the third mode indication.

In some embodiments, the configuration parameter may include the time parameter. For example, the configuration parameter may include the first duration, the second duration, and the fifth duration. For example, the configuration parameter may include the first duration, the third duration, and the fifth duration. For example, the configuration parameter may include the first duration, the fourth duration, and the fifth duration.

In some embodiments, the configuration parameter may include only the time parameter corresponding to individual mode. For example, the third information may include the second duration. For example, the third information may include the third duration. For example, the third information may include the fourth duration.

In some embodiments, the configuration parameter may include the mode parameter and time parameter. For example, the configuration parameter may include the first mode indication, the first duration, the second duration, and the fifth duration. For example, the configuration parameter may include the first mode indication and the second duration. For example, the configuration parameter may include the second mode indication, the first duration, the third duration, and the fifth duration. For example, the configuration parameter may include the second mode indication and the third duration. For example, the configuration parameter may include the third mode indication, the first duration, the fourth duration, and the fifth duration. For example, the configuration parameter may include the third mode indication and the fourth duration.

In some embodiments, the network device 102 may send a radio resource control (RRC) message. The RRC message may include the third information. Optionally, the terminal 101 may receive the RRC message.

In some embodiments, the network device 102 may send a media access control-control element (MAC CE) message. The MAC CE message may include the third information. Optionally, the terminal 101 may receive the MAC CE message.

In some embodiments, the network device 102 may send downlink control information (DCI). The DCI may include the third information. Optionally, the terminal 101 may receive the DCI information.

In some embodiments, the third information may include the indication information, but not include the configuration parameter. Optionally, the network device 102 may send the configuration parameter via other information. Optionally, the network device 102 may not send the configuration parameter.

In some embodiments, the third information may include the configuration parameter, but not include the indication information. Optionally, the network device 102 may not send the indication information.

In some embodiments, the third information may include the indication information and the mode parameter.

In some embodiments, the third information may include the indication information and the time parameter.

In some embodiments, the third information may include the indication information, the mode parameter, and the time parameter.

In step S220, the terminal 101 determines that it is allowed to autonomously perform the GNSS measurement.

In some embodiments, the terminal 101 may determine whether it is allowed to autonomously perform the GNSS measurement.

In some embodiments, the terminal 101 may determine whether it is allowed to autonomously perform the GNSS measurement according to the third information.

In some embodiments, in a case where the third information is received, the terminal 101 may determine whether it is allowed to autonomously perform the GNSS measurement according to the indication information in the third information. In an example, in a case where the third information is received, and the indication information included in the third information has the first value, the terminal 101 may determine that it is allowed to autonomously perform the GNSS measurement. In an example, in a case where the third information is received, and the indication information included in the third information has the second value, the terminal 101 may determine that it is not allowed to autonomously perform the GNSS measurement.

In some embodiments, in a case where the third information is received, and the third information includes the configuration parameter, the terminal 101 may determine that it is allowed to autonomously perform the GNSS measurement.

In some embodiments, in a case where the terminal 101 does not receive the third information, the terminal 101 may determine that it is not allowed to autonomously perform the GNSS measurement.

In step S230, the terminal 101 obtains the configuration parameter.

In some embodiments, the terminal 101 may obtain the configuration parameter according to the third information. In an example, in a case where the third information includes the configuration parameter, the terminal 101 may obtain the configuration parameter from the third information. In an example, in a case where the configuration parameter is sent to the terminal 101 via other information independent of the third information, the terminal 101 may obtain the configuration parameter from the other information.

In some embodiments, the terminal 101 may obtain the configuration parameter in a predefined manner.

In some embodiments, the terminal 101 may determine the configuration parameter based on information reported by terminal 101.

In some embodiments, after obtaining the configuration parameter in the predefined manner, the terminal 101 may send the obtained configuration parameter to the network device 102.

In some embodiments, the predefined manner may include that: the terminal 101 may select the configuration parameter from a predetermined configuration parameter set. For example, the terminal 101 may select the configuration parameter from the predetermined configuration parameter set according to the information reported to the network device 102.

In some embodiments, the predefined manner may include that: the terminal 101 may obtain the configuration parameter by calculation. For example, the terminal 101 may calculate the configuration parameter based on the information reported to the network device 102.

In some embodiments, the terminal 101 may obtain a part of the configuration parameter according to the third information, and may obtain another part of the configuration parameter in a predefined manner.

In some embodiments, the terminal 101 may obtain the configuration parameter only according to the third information.

In some embodiments, the terminal 101 may obtain the configuration parameter only in a predefined manner.

In step S240, the terminal 101 performs the GNSS measurement.

In some embodiments, the terminal 101 may autonomously perform the GNSS measurement.

In some embodiments, after the GNSS validity duration of the terminal 101 ends, the timer is started and the GNSS measurement is performed.

In some embodiments, the terminal 101 may start the timer and determine to perform the GNSS measurement when the GNSS validity duration ends or is about to end.

In some embodiments, the terminal 101 may obtain the fifth duration and/or the sixth duration according to the configuration parameter.

In some embodiments, the terminal may start the timer and determine to perform the GNSS measurement at the end of the fifth duration which starts from the end of the GNSS validity duration.

In some embodiments, according to the obtained fifth duration, the terminal 101 may start the timer at the end of the fifth duration.

In some embodiments, according to the obtained sixth duration, the terminal 101 may autonomously perform the GNSS measurement at the end of the sixth duration.

In some embodiments, according to the obtained fifth duration, the terminal 101 may automatically start the timer and autonomously perform the GNSS measurement at the end of the fifth duration.

In some embodiments, in a case where no second information is received until the end of the GNSS validity duration of the terminal 101, the terminal 101 starts the timer and performs the GNSS measurement after the end moment of the GNSS validity duration.

In some embodiments, in a case where the GNSS validity duration of the terminal 101 is about to end, but the second information is not received, the terminal 101 starts the timer and performs the GNSS measurement after the end moment of the GNSS validity duration. In an example, if the terminal 101 has not yet received the second message a certain duration prior to the end of the GNSS validity duration, the terminal 101 may start the timer and perform the GNSS measurement after the end moment of the GNSS validity duration. For example, when there are still a certain number of slots before the end of the GNSS validity duration, if the terminal 101 has not received the second information, the terminal 101 may start the timer and perform the GNSS measurement after the end moment of the GNSS validity duration.

In some embodiments, in a case where the second information is not received within the fifth duration after the GNSS validity duration of terminal 101 ends, the terminal 101 starts the timer and performs the GNSS measurement at the end of the fifth duration.

In some embodiments, the second information may be used to trigger the terminal 101 to perform the GNSS measurement.

In some embodiments, the second information may be information sent by the network device 102 to the terminal 101.

In some embodiments, the fifth duration may be a duration from the end of the GNSS validity duration to the start of the timer.

In some embodiments, a value of the fifth duration may be greater than or equal to 0. For example, the value of the fifth duration may be 0, that is, the timer is started at the end of the GNSS validity duration. For example, the value of the fifth duration may be 3 milliseconds, that is, the timer is started after 3 milliseconds from the end moment of the GNSS validity duration. For example, the value of the fifth duration may be 4 slots, that is, the timer is started after 4 slots from the end moment of the GNSS validity duration.

In some embodiments, the terminal 101 may obtain the first duration according to the configuration parameter.

In some embodiments, the first duration may be a duration of the timer.

In some embodiments, when starting the timer, the terminal 101 may set the duration of the timer to the first duration.

In some embodiments, the terminal 101 may autonomously perform the GNSS measurement within the first duration. In an example, the terminal 101 may autonomously perform the GNSS measurement at a start moment of the first duration. In other words, the terminal 101 may autonomously perform the GNSS measurement while starting the timer. In an example, the GNSS measurement autonomously performed by the terminal 101 may occupy the entire first duration. In an example, the GNSS measurement autonomously performed by the terminal 101 may occupy a part of the first duration. For example, the terminal 101 may autonomously perform the GNSS measurement while starting the timer, and complete the GNSS measurement before the first duration of the timer ends. For example, the terminal 101 may autonomously perform the GNSS measurement after starting the timer, and complete the GNSS measurement before the first duration of the timer ends. For example, the terminal 101 may autonomously perform the GNSS measurement after starting the timer, and complete the GNSS measurement at the end of the first duration of the timer.

In some embodiments, after performing the GNSS measurement, the terminal 101 may obtain the result of the GNSS measurement performed autonomously.

In some embodiments, the result of the GNSS measurement autonomously performed by the terminal 101 may include the following two types: success and failure. In other words, the terminal 101 may determine whether the GNSS measurement performed autonomously is successful or failed.

In some embodiments, after performing the GNSS measurement, the terminal 101 may obtain the GNSS validity duration. It is understandable that the GNSS validity duration obtained here may be a validity duration of location information obtained in a case where the terminal 101 successfully performs the GNSS measurement.

In step S250, the terminal 101 indicates the result of the GNSS measurement autonomously performed.

In some embodiments, after autonomously performing the GNSS measurement, the terminal 101 may indicate the result of the GNSS measurement autonomously performed to the network device 102.

In some embodiments, the terminal 101 may send first information. The first information may indicate the result of the GNSS measurement autonomously performed by the terminal 101.

In some embodiments, the first information may include GNSS measurement result information. The GNSS measurement result information may directly indicate the result of the GNSS measurement autonomously performed by the terminal 101. In an example, the GNSS measurement result information may have a first value, such as "1", and the GNSS measurement result information may indicate that the GNSS measurement autonomously performed by the terminal 101 succeeds. In an example, the GNSS measurement result may have a first value, such as "0", and the GNSS measurement result may indicate that the GNSS measurement autonomously performed by the terminal 101 fails.

In some embodiments, the first information may include GNSS validity duration information. The GNSS validity duration information may indicate a GNSS validity duration obtained based on the GNSS measurement, and the GNSS validity duration may be a remaining validity duration.

In some embodiments, the GNSS validity duration information included in the first information may indicate the result of the GNSS measurement autonomously performed by the terminal 101. In an example, in a case where the first information includes the GNSS validity duration information, the first information may indicate that the GNSS measurement autonomously performed by the terminal 101 succeeds. In an example, the GNSS validity duration indicated by the GNSS validity duration information may indicate the result of the GNSS measurement autonomously performed by the terminal 101.

In some embodiments, the terminal 101 may not send the first information. In this case, the terminal 101 may implicitly indicate that the GNSS measurement autonomously performed by the terminal fails.

In some embodiments, in a case where a variation of the GNSS validity duration determined based on the GNSS measurement relative to a GNSS validity duration determined based on a previous GNSS measurement is less than a first threshold, the first information may be GNSS measurement result information.

In some embodiments, in a case where a variation of the GNSS validity duration determined based on the GNSS measurement relative to a GNSS validity duration determined based on a previous GNSS measurement is greater than or equal to a first threshold, the first information may be GNSS validity duration information.

In some embodiments, in a case where a variation of the GNSS validity duration determined based on the GNSS measurement relative to a GNSS validity duration determined based on a previous GNSS measurement is less than or equal to a first threshold, the first information may be GNSS measurement result information.

In some embodiments, in a case where a variation of the GNSS validity duration determined based on the GNSS measurement relative to a GNSS validity duration determined based on a previous GNSS measurement is greater than a first threshold, the first information may be GNSS validity duration information.

In some embodiments, the GNSS validity duration obtained by the previous GNSS measurement may be a GNSS validity duration obtained by the GNSS measurement last time and reported last time.

In some embodiments, the first threshold may be preset.

In some embodiments, the first threshold may be configured by the terminal 101.

In some embodiments, the first threshold may be configured by the network device 102 for the terminal 101.

In some embodiments, the terminal 101 may use the first mode to indicate the result of the GNSS measurement autonomously performed. FIG. 3A is a schematic diagram of a first example of a reporting position of a GNSS measurement according to embodiments of the present invention. As shown in FIG. 3A, the terminal 101 starts the timer and performs the GNSS measurement after M slots from the end of the GNSS validity duration. After X slots from the end of the first duration of the timer, the terminal 101 may send the first information to indicate the result of the GNSS measurement autonomously performed. Here, M slots constitute the fifth duration, and X slots constitute the second duration.

In some embodiments, the terminal 101 may use the second mode to indicate the result of the GNSS measurement autonomously performed. FIG. 3B is a schematic diagram of a second example of a reporting position of a GNSS measurement according to embodiments of the present invention. As shown in FIG. 3B, the terminal 101 starts the timer and performs the GNSS measurement after M slots from the end of the GNSS validity duration. Within X slots from the end of the first duration of the timer, the terminal 101 may send the first information to indicate the result of the GNSS measurement autonomously performed. Here, M slots constitute the fifth duration, and X slots constitute the third duration. In an example, the terminal 101 may select an appropriate time within the duration of X slots to send the first information. For example, the terminal 101 may send the first information on the first available RACH within the duration of X slots.

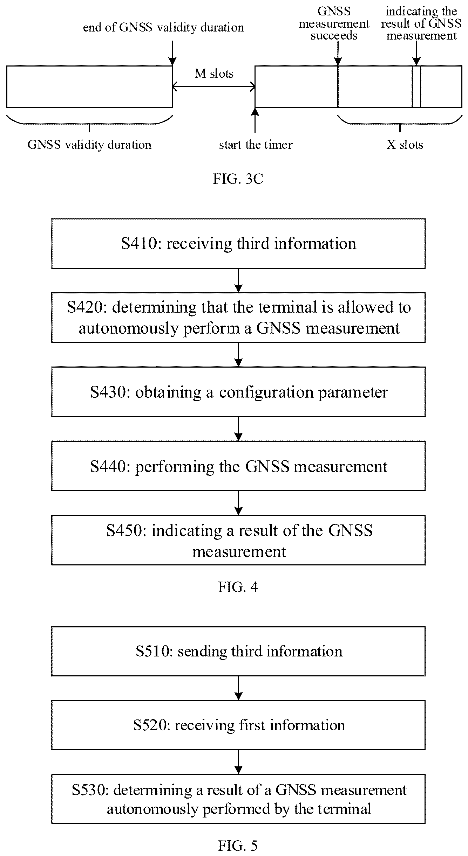

In some embodiments, the terminal 101 may use the third mode to indicate the result of the GNSS measurement autonomously performed. FIG. 3C is a schematic diagram of a third example of a reporting position of a GNSS measurement according to embodiments of the present invention. As shown in FIG. 3C, the terminal 101 starts the timer and performs the GNSS measurement after M slots from the end of the GNSS validity duration. Within X slots from the completion of the GNSS measurement, the terminal 101 may send the first information to indicate the result of the GNSS measurement autonomously performed. Here, M slots constitute the fifth duration, and X slots constitute the fourth duration. In an example, the terminal 101 may select an appropriate time within the duration of X slots to send the first information. For example, the terminal 101 may send the first information on the first available RACH within the duration of X slots.

In some embodiments, the terminal 101 may send the first information via an uplink data channel.

In some embodiments, the terminal 101 may send the first information via an uplink control channel.

In some embodiments, the first information may be carried on the PRACH.

In some embodiments, the terminal 101 may send the first information by using one or more preambles in a preamble sequence set.

In some embodiments, the terminal 101 may send the first information on the PRACH by using a preamble sequence set.

In some embodiments, the first information may be carried on a physical uplink control channel (PUCCH).

In some embodiments, the first information may be carried on an uplink dedicated physical control channel (DPCCH).

In some embodiments, the first information may be carried on a physical uplink shared channel (PUSCH).

In some embodiments, the first information may be carried on an uplink dedicated physical data channel (DPDCH).

In some embodiments, the first information may include GNSS position fix duration information. The GNSS position fix duration information may indicate a GNSS position fix duration.

In step S260, the network device 102 determines the result of the GNSS measurement autonomously performed by the terminal 101.

In some embodiments, the network device 102 may determine the result of the GNSS measurement autonomously performed by the terminal 101 according to the indication of the terminal 101.

In some embodiments, the network device 102 may receive the first information and determine the result of the GNSS measurement autonomously performed by the terminal 101 according to the first information.

In some embodiments, the first information may include GNSS measurement result information. In an example, the GNSS measurement result information may have a first value, such as "1", and the GNSS measurement result information may indicate that the GNSS measurement autonomously performed by the terminal 101 succeeds. In this case, the network device 102 may determine, according to the GNSS measurement result information, that the GNSS measurement autonomously performed by the terminal 101 succeeds. In an example, the GNSS measurement result may have a first value, such as "0", and the GNSS measurement result may indicate that the GNSS measurement autonomously performed by the terminal 101 fails. In this case, the network device 102 may determine, according to the GNSS measurement result information, that the GNSS measurement autonomously performed by the terminal 101 fails.

In some embodiments, the first information may include GNSS validity duration information. In this case, the network device 102 may determine the result of the GNSS measurement autonomously performed by the terminal 101, according to the GNSS validity duration information.

In some embodiments, the network device 102 may determine the result of the GNSS measurement autonomously performed by the terminal 101 according to whether the GNSS validity duration information exists. Specifically, when the GNSS validity duration information is received, the network device 102 may determine that the GNSS measurement autonomously performed by the terminal 101 succeeds.

In some embodiments, the network device 102 may determine the result of the GNSS measurement autonomously performed by the terminal 101, according to a GNSS validity duration indicated by the GNSS validity duration information.

In some embodiments, in a case where the GNSS validity duration is less than a second threshold, the network device 102 may determine the result of the GNSS measurement autonomously performed by the terminal 101.

In some embodiments, in a case where the GNSS validity duration is greater than or equal to a second threshold, the network device 102 may determine the result of the GNSS measurement autonomously performed by the terminal 101.

In some embodiments, in a case where the GNSS validity duration is less than or equal to a second threshold, the network device 102 may determine the result of the GNSS measurement autonomously performed by the terminal 101.

In some embodiments, in a case where the GNSS validity duration is greater than a second threshold, the network device 102 may determine the result of the GNSS measurement autonomously performed by the terminal 101.

In some embodiments, the second threshold may be preset.

In some embodiments, the second threshold may be configured by other network devices or the terminal 101 for the network device 102.

In some embodiments, the second threshold may be configured by the network device 102.

In some embodiments, the network device 102 may receive the first information on the PRACH.

In some embodiments, the network device 102 obtains the first information from a preamble for determining the PRACH.

In some embodiments, the network device 102 may receive the first information on the PUCCH.

In some embodiments, the network device 102 may receive the first information on the DPCCH.

In some embodiments, the network device 102 may receive the first information on the PUSCH.

In some embodiments, the network device 102 may receive the first information on the DPDCH.

In some embodiments, the names of above information, etc. are not limited to those recorded in embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" may be used interchangeably.

In some embodiments, terms such as "moment", "time point", "time", and "time position" may be interchangeable, and terms such as "duration", "period of time", "time window", "window", and "time" may be interchangeable.

In some embodiments, terms such as "frame", "radio frame", "subframe", "slot", "sub-slot", "mini-slot", "symbol", "code element", "transmission time interval (TTI)" and so on may be used interchangeably.

In some embodiments, terms such as "obtain", "acquire", "get", "receive", "transmission", "bidirectional transmission", "send and/or receive" may be interchangeable, and may be interpreted as receiving from other entities, obtaining from a protocol, obtaining from a high layer, obtaining by self-processing, autonomous implementation, etc.

In some embodiments, terms such as "send", "transmit", "report", "launch", "transmission", "bidirectional transmission", "send and/or receive" may be used interchangeably.

In some embodiments, terms such as "specific", "preset", "predetermined", "set", "indicated", "certain", "any", or "first" may be interchangeable, and "specific A", "preset A", "predetermined A", "set A", "indicated A", "certain A", "any A", or "first A" may be interpreted as A pre-defined in such as a protocol, etc., or interpreted as A obtained according to setting, configuration, or indication, etc., and may also be interpreted as specific A, certain A, any A, or first A, etc., but are not limited thereto.

In some embodiments, determination or judgment may be represented by a value (0 or 1) of 1 bit, by a true or false value (Boolean value) representing true or false, or may be performed by comparison of numerical values (for example, comparison with a predetermined value), but is not limited thereto.

The communication method based on the GNSS involved in embodiments of the present invention may include at least one of steps S220 to S260. For example, step S250 may be implemented as an independent embodiment. For example, the combination of steps S250 and S260 may be implemented as an independent embodiment. For example, the combination of steps S240 and S250 may be implemented as an independent embodiment. For example, the combination of steps S210 and S260 may be implemented as an independent embodiment. For example, the combination of steps S210, S220, S230, S240 and S250 may be implemented as an independent embodiment. It should be noted that the possible independent embodiments including one or more steps of steps S210 to S260 are not limited thereto.

In some embodiments, steps S210 to S240 and S260 are optional, and one or more of these steps may be omitted or replaced in different embodiments.

In some embodiments, steps S210 to S240 are optional, and one or more of these steps may be omitted or replaced in different embodiments.

FIG. 4 is a schematic flowchart of a communication method based on a GNSS according to embodiments of the present invention. Embodiments of the present invention relate to a communication method based on a GNSS, which is applied to a terminal 101. As shown in FIG. 4, the method includes steps S410 to S450.

In step S410, third information is received.

Optional implementation manners of step S410 may refer to the optional implementation manners of step S210 in FIG. 2 and other related parts in embodiments involved in FIG. 2, which will not be repeated here.

In some embodiments, the terminal 101 may receive the third information from the network device 102.

In some embodiments, the network device 102 may send the third information to the terminal 101.

In some embodiments, the third information may indicate that the terminal 101 is allowed to autonomously perform a GNSS measurement.

In some embodiments, the terminal 101 may receive the third information from the network device 102.

In some embodiments, the terminal 101 may obtain second information specified by a protocol.

In some embodiments, the terminal 101 may obtain the second information from a high layer.

In some embodiments, the terminal 101 may perform processing to obtain the second information.

In step S420, it is determined that a GNSS measurement is allowed to be autonomously performed.

Optional implementation manners of step S420 may refer to the optional implementation manners of step S220 in FIG. 2 and other related parts in embodiments involved in FIG. 2, which will not be repeated here.

In some embodiments, the terminal 101 may determine whether it is allowed to autonomously perform the GNSS measurement according to the third information.

In step S430, a configuration parameter is obtained.

Optional implementation manners of step S430 may refer to the optional implementation manners of step S230 in FIG. 2 and other related parts in embodiments involved in FIG. 2, which will not be repeated here.

In some embodiments, the terminal 101 may obtain the configuration parameter.

In some embodiments, the terminal 101 may obtain the configuration parameter according to the third information.

In some embodiments, the terminal 101 may obtain the configuration parameter in a predefined manner.

In step S440, the GNSS measurement is performed.

Optional implementation manners of step S440 may refer to the optional implementation manners of step S240 in FIG. 2 and other related parts in embodiments involved in FIG. 2, which will not be repeated here.

In some embodiments, the terminal 101 may autonomously perform the GNSS measurement.

In some embodiments, the terminal 101 may autonomously perform the GNSS measurement according to the configuration parameter.

In step S450, a result of the GNSS measurement autonomously performed is indicated.

Optional implementation manners of step S450 may refer to the optional implementation manners of step S250 in FIG. 2 and other related parts in embodiments involved in FIG. 2, which will not be repeated here.

In some embodiments, the terminal 101 may indicate to the network device 102 the result of the GNSS measurement performed autonomously.

In some embodiments, the network device 102 may obtain the result of the GNSS measurement autonomously performed by the terminal 101.

In some embodiments, the terminal 101 may indicate the result of the GNSS measurement performed autonomously, according to the configuration parameter.

In some embodiments, the terminal 101 may use the first mode to indicate the result of the GNSS measurement performed autonomously.

In some embodiments, the terminal 101 may use the second mode to indicate the result of the GNSS measurement performed autonomously.

In some embodiments, the terminal 101 may use the third mode to indicate the result of the GNSS measurement performed autonomously.

The communication method based on the GNSS involved in embodiments of the present invention may include at least one of steps S410 to S450. For example, step S450 may be implemented as an independent embodiment. For example, the combination of steps S430, S440, and S450 may be implemented as an independent embodiment. For example, the combination of steps S420, S430, S440, and S450 may be implemented as an independent embodiment. For example, the combination of steps S410, S420, S430, S440, and S450 may be implemented as an independent embodiment. It should be noted that possible independent embodiments including one or more steps of steps S410 to S450 are not limited thereto.

In some embodiments, steps S410 to S440 are optional, and one or more of these steps may be omitted or replaced in different embodiments.

FIG. 5 is a schematic flowchart of a communication method based on a GNSS according to embodiments of the present invention. Embodiments of the present invention relate to a communication method based on a GNSS, which is applied to a network device 102. As shown in FIG. 5, the method includes steps S510 to S530.

In step S510, third information is sent.

Optional implementation manners of step S510 may refer to the optional implementation manners of step S210 in FIG. 2 and other related parts in embodiments involved in FIG. 2, which will not be repeated here.

In step S520, first information is received.

Optional implementation manners of step S520 may refer to the optional implementation manners of step S250 in FIG. 2 and other related parts in embodiments involved in FIG. 2, which will not be repeated here.

In some embodiments, the network device 102 may obtain second information specified by a protocol.

In some embodiments, the network device 102 may obtain second information from a high layer.

In some embodiments, the network device 102 may perform processing to obtain second information.

In step S530, a result of a GNSS measurement autonomously performed by the terminal 101 is determined.

Optional implementation manners of step S530 may refer to the optional implementation manners of step S260 in FIG. 2 and other related parts in embodiments involved in FIG. 2, which will not be repeated here.

In some embodiments, the network device 102 may determine, based on the first information, the result of the GNSS measurement autonomously performed by the terminal 101.

In some embodiments, in case of not receiving the first information, the network device 102 may determine that the GNSS measurement autonomously performed by the terminal fails.

The communication method based on the GNSS involved in embodiments of the present invention may include at least one of steps S510 and S520. For example, step S510 may be implemented as an independent embodiment. For example, step S520 may be implemented as an independent embodiment. For example, the combination of steps S510 and S520 may be implemented as an independent embodiment. It should be noted that possible independent embodiments including one or more steps of steps S510 and S520 are not limited thereto.

In some embodiments, step S510 is optional, and one or more of these steps may be omitted or replaced in different embodiments.

In some embodiments, step S520 is optional, and one or more of these steps may be omitted or replaced in different embodiments.

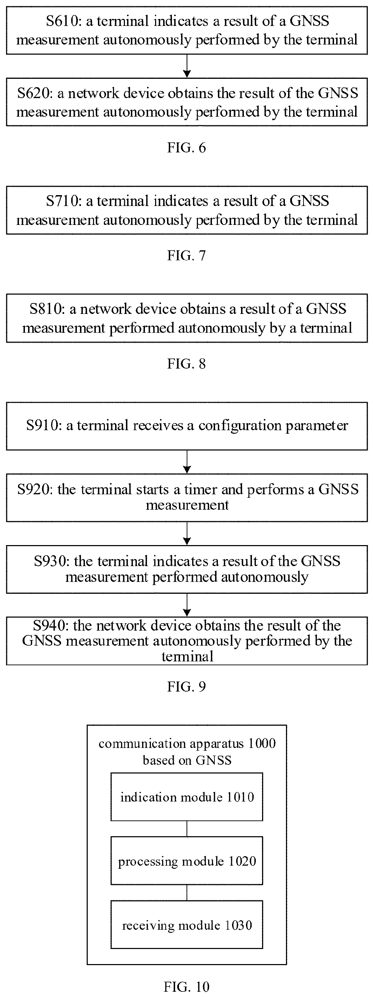

FIG. 6 is a schematic interactive diagram of a communication method based on a GNSS according to embodiments of the present invention. Embodiments of the present invention relate to a communication method based on a GNSS. As shown in FIG. 6, the method includes steps S610 and S620.

In step S610, a terminal 101 indicates a result of a GNSS measurement autonomously performed by the terminal 101.

Optional implementation manners of step S610 may refer to step S250 of FIG. 2, step S450 of FIG. 3, and other related parts in embodiments involved in FIG. 2 and FIG. 3, which will not be repeated here.

In step S620, a network device 102 obtains the result of the GNSS measurement autonomously performed by the terminal 101.

Optional implementation manners of step S620 may refer to steps S250 and S260 of FIG. 2, steps S510 and S520 of FIG. 4, and other related parts in embodiments involved in FIG. 2 and FIG. 4, which will not be repeated here.

In some embodiments, the method may include the method as described above in any embodiments from the sides of the terminal and the network device, which will not be repeated here.

FIG. 7 is a schematic interactive diagram of a communication method based on a GNSS according to embodiments of the present invention. Embodiments of the present invention relate to a communication method based on a GNSS measurement. As shown in FIG. 7, the method includes step S710.

In step S710, a terminal 101 indicates a result of a GNSS measurement autonomously performed by the terminal 101.

Optional implementation manners of step S710 may refer to step S250 of FIG. 2, step S450 of FIG. 4, and other related parts in embodiments involved in FIG. 2 and FIG. 4, which will not be repeated here.

In some embodiments, the method may include the method as described above in any embodiments from the side of the terminal, which will not be repeated here.

FIG. 8 is a schematic interactive diagram of a communication method based on a GNSS according to embodiments of the present invention. Embodiments of the present invention relate to a communication method based on a GNSS measurement. As shown in FIG. 7, the method includes step S810.

In step S810, a network device 102 obtains a result of a GNSS measurement performed autonomously by a terminal 101.

Optional implementation manners of step S810 may refer to steps S250 and S260 of FIG. 2, steps S510 and S520 of FIG. 5, and other related parts of embodiments involved in FIG. 2 and FIG. 5, which will not be repeated here.

In some embodiments, the method may include the method as described above in any embodiments from the side of the network device, which will not be repeated here.

FIG. 9 is a schematic flowchart of a communication method based on a GNSS according to embodiments of the present invention. Embodiments of the present invention relate to a communication method based on a GNSS. As shown in FIG. 9, the method includes steps S910 to S940.

In step S910, a terminal 101 receives a configuration parameter.

In some embodiments, the terminal 101 may receive the configuration parameter from a network device 102.

In step S920, the terminal 101 starts a timer and performs a GNSS measurement.

In some embodiments, in a case where the terminal 101 determines that a GNSS validity duration ends or is about to end, and the terminal 101 does not receive information for triggering the execution of the GNSS measurement from the network device 102, the terminal 101 may start a timer for the GNSS measurement and perform the GNSS measurement before a first duration of the timer ends.

In some embodiments, the first duration may be obtained based on the configuration parameter.

In some embodiments, the terminal 101 may start the timer after a fifth duration from the end of the GNSS validity duration.

In some embodiments, the fifth duration may be obtained based on the configuration parameter.

In some embodiments, the configuration parameter may be received by the terminal 101 from the network device 102.

In some embodiments, the configuration parameter may be determined by the terminal in a predefined manner (e.g., based on information reported by the terminal).

In some embodiments, a start position of the timer may be a time-domain position after M slots from an end moment of the GNSS validity duration.

In some embodiments, the value of M may be 0.

In some embodiments, the value of M may be a positive integer.

In step S930, the terminal 101 indicates a result of the GNSS measurement performed autonomously.

In some embodiments, in a case where the GNSS measurement autonomously performed by the terminal 101 succeeds, the terminal 101 may indicate that the GNSS measurement performed autonomously succeeds.

In some embodiments, in a case where the GNSS measurement autonomously performed by the terminal 101 fails, the terminal 101 may indicate that the GNSS measurement performed autonomously fails.

In some embodiments, the terminal 101 may send first information.

In some embodiments, the first information may include GNSS measurement result information. The GNSS measurement result information may indicate different states of the GNSS measurement result through different values.

In some embodiments, the GNSS measurement result information may have 1 bit.

In some embodiments, the value of the GNSS measurement result information may be "1" to indicate that the GNSS measurement succeeds.

In some embodiments, the value of the GNSS measurement result information may be "0" to indicate that the GNSS measurement succeeds.

In some embodiments, the first information may include GNSS validity duration information.

In some embodiments, the terminal 101 may not send the first information.

In some embodiments, in a case where the terminal 101 determines that the GNSS validity duration has no variation or has a variation that is less than a first threshold, as compared with a GNSS validity duration reported last time, the terminal 101 may send the GNSS measurement result information.

In some embodiments, in a case where the terminal 101 determines that the GNSS validity duration has a variation that is greater than or equal to a first threshold, as compared with a GNSS validity duration reported last time, the terminal 101 may send the GNSS validity duration information.

In some embodiments, the terminal 101 may also carry GNSS position fix duration information in the first information.

In some embodiments, the terminal 101 may determine, according to a predefined manner or pre-configuration by the network device 102, a reporting time for indicating the result of the GNSS measurement performed autonomously.

In some embodiments, in a first mode, the terminal 101 may determine a reporting time based on a predefined or preconfigured method. The terminal 101 may determine a time interval X, and the terminal 101 may report the result of the GNSS measurement after the time interval X from a time-domain position at which the timer of the GNSS measurement expires or times out. X may be predefined or preconfigured, and the unit of X may be a logical time unit (such as a subframe, a slot, etc.) or a natural time unit (such as a millisecond). In an example, in a case where the terminal 101 does not receive a triggering instruction sent by the network device 102 for triggering the execution of the GNSS measurement within M slots from the end of the GNSS validity duration, the terminal 101 may start the timer for the GNSS measurement, and indicate the result of the GNSS measurement on a time-domain resource after X slots from an end position of the timer. M and X may be predefined values, or indicated in other RRC messages, MAC CE messages, or DCI received by the terminal 101 from the network device 102.

In some embodiments, in a second mode, the terminal 101 may determine a reporting time based on a predefined or preconfigured method. The terminal 101 may determine a time interval X, and the terminal 101 may report the result of the GNSS measurement after the time interval X from a time-domain position at which the timer of the GNSS measurement expires or times out. X may be predefined or preconfigured, and the unit of X may be a logical time unit (such as a subframe, a slot, etc.) or a natural time unit (such as a millisecond). In an example, in a case where the terminal 101 does not receive a triggering instruction sent by the network device 102 for triggering the execution of the GNSS measurement within M slots from the end of the GNSS validity duration, the terminal 101 may start the timer for the GNSS measurement, and select an appropriate time in a time-domain resource of X slots from an end position of the timer to indicate the result of the GNSS measurement. M and X may be predefined values, or indicated in other RRC messages, MAC CE messages, or DCI received by the terminal 101 from the network device 102.

In some embodiments, in a third mode, the terminal 101 may determine a reporting time based on a predefined or preconfigured method. The terminal 101 may determine a time interval X, and the terminal 101 may report the result of the GNSS measurement after the time interval X from a time-domain position at which the timer of the GNSS measurement expires or times out. X may be predefined or preconfigured, and the unit of X may be a logical time unit (such as a subframe, a slot, etc.) or a natural time unit (such as a millisecond). In an example, in a case where the terminal 101 does not receive a triggering instruction sent by the network device 102 for triggering the execution of the GNSS measurement within M slots from the end of the GNSS validity duration, the terminal 101 may start the timer for the GNSS measurement, and select an appropriate time in a time-domain resource of X slots from a moment when the GNSS measurement succeeds to indicate the result of the GNSS measurement. M and X may be predefined values, or indicated in other RRC messages, MAC CE messages, or DCI received by the terminal 101 from the network device 102.

In some embodiments, the terminal 101 may send the first information via an uplink data channel.

In some embodiments, the terminal 101 may send the first information via an uplink control channel.

In some embodiments, the terminal 101 may send the first information via a PRACH.

In some embodiments, a preamble sequence set may be predefined. In this case, when the terminal 101 sends the first information on the PRACH by using the preamble sequence set, the network device 102 may determine that the preamble is used to indicate the result of the GNSS measurement.

In step S940, the network device 102 obtains the result of the GNSS measurement autonomously performed by the terminal 101.

In some embodiments, the network device 102 may receive the first information and determine the result of the GNSS measurement autonomously performed by the terminal 101 according to the first information.

In some embodiments, the network device 102 may determine the result of the GNSS measurement autonomously performed by the terminal 101 according to the GNSS measurement result information.

In some embodiments, the value of the GNSS measurement result information may be "1", and the network device 102 may determine that the GNSS measurement autonomously performed by the terminal 101 succeeds.

In some embodiments, the value of the GNSS measurement result information may be "0", and the network device 102 may determine that the GNSS measurement autonomously performed by the terminal 101 fails.

In some embodiments, the network device 102 may determine the result of the GNSS measurement autonomously performed by the terminal 101 according to the GNSS validity duration information.

In some embodiments, in a case where the network device 102 does not receive the GNSS validity duration information, the network device 102 may determine that the GNSS measurement autonomously performed by the terminal 101 fails.

In some embodiments, in a case where the network device 102 receives the GNSS validity duration information, the network device 102 may determine that the GNSS measurement autonomously performed by the terminal 101 succeeds.

In some embodiments, in a case where the network device 102 determines that the GNSS validity duration indicated by the GNSS validity duration information is greater than a second threshold, the network device 102 may determine that the GNSS measurement autonomously performed by the terminal 101 succeeds.

In some embodiments, in a case where the network device 102 determines that the GNSS validity duration indicated by the GNSS validity duration information is greater than or equal to a second threshold, the network device 102 may determine that the GNSS measurement autonomously performed by the terminal 101 succeeds.

In some embodiments, in a case where the network device 102 determines that the GNSS validity duration indicated by the GNSS validity duration information is less than or equal to a second threshold, the network device 102 may determine that the GNSS measurement autonomously performed by the terminal 101 fails.

In some embodiments, in a case where the network device 102 determines that the GNSS validity duration indicated by the GNSS validity duration information is less than or equal to a second threshold, the network device 102 may determine that the GNSS measurement autonomously performed by the terminal 101 fails.

The communication method based on the GNSS involved in embodiments of the present invention may include at least one of steps S210 to S260. For example, step S930 may be implemented as an independent embodiment, and step S940 may be implemented as an independent embodiment. For example, the combination of steps S920 and S930 may be implemented as an independent embodiment, the combination of steps S910, S920 and S930 may be implemented as an independent embodiment, and the combination of steps S940 and S910 may be implemented as an independent embodiment, but the present invention is not limited thereto.

In some embodiments, step S910, step S920, and step S940 are optional, and one or more of these steps may be omitted or replaced in different embodiments.

In some embodiments, step S910, step S920, and step S930 are optional, and one or more of these steps may be omitted or replaced in different embodiments.

In embodiments of the present invention, part or all of the steps or their optional implementation manners may be arbitrarily combined with part or all of the steps in other embodiments, or may be arbitrarily combined with optional implementation manners of other embodiments.

Embodiments of the present invention further provide an apparatus for implementing any of the above methods. For example, embodiments of the present invention provide an apparatus, and the apparatus includes one or more units or modules for implementing various steps performed by the terminal as described in any of the above methods. For another example, another apparatus is also provided, which includes one or more units or modules for implementing various steps performed by the network device (such as an access network device, a core network device, etc.) as described in any of the above methods.

It should be understood that the division of the units or modules in the above apparatuses is only a division of logical functions, and all or part of these units or modules may be integrated into one physical entity or may be physically separated as required in implementation. In addition, the units or modules in the apparatus may be implemented in the form of processor calling software: for example, the apparatus includes a processor, the processor is connected to a memory, instructions are stored in the memory, and the processor calls the instructions stored in the memory to implement any of the above methods or implement the functions of various units or modules of the above apparatus. The processor is, for example, a general-purpose processor, such as a central processing unit (CPU) or a microprocessor, and the memory is a memory inside or outside the apparatus. Alternatively, the units or modules in the apparatus may be implemented in the form of hardware circuit, and the hardware circuit may be designed to implement the functions of some or all of the units or modules. The above hardware circuit may be understood as one or more processors. For example, in an implementation, the above hardware circuit is an application-specific integrated circuit (ASIC), and the functions of some or all of the above units or modules are realized by designing the logical relationship of components in the circuit. For example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units or modules. All units or modules of the above apparatus may be realized in the form of processor calling software or in the form of hardware circuit, or a part of them may be realized in the form of processor calling software, and the rest may be realized in the form of hardware circuit.

In embodiments of the present invention, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the hardware circuit is fixed or reconfigurable. For example, the processor is a hardware circuit implemented by an application-specific integrated circuit (ASIC) or a programmable logic device (PLD), such as FPGA. In a reconfigurable hardware circuit, the processor loads a configuration file to implement the process of hardware circuit configuration, which may be understood as a process where the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 10 is a schematic diagram of a communication apparatus based on a GNSS according to embodiments of the present invention. As shown in FIG. 10, the communication apparatus 1000 based on the GNSS may include at least one of: an indication module 1010, a processing module 1020, or a receiving module 1030.

In some embodiments, the indication module 1010 may be configured to indicate a result of a GNSS measurement autonomously performed by the terminal. Optionally, the indication module 1010 may be configured to perform at least one of the indication-related steps (e.g., step S250, step S450, step S620, step S710, step S930, but not limited thereto) performed by the terminal 101 in any of the above methods.

In some embodiments, the processing module 1020 may be configured to autonomously perform the GNSS measurement within a first duration. Optionally, the processing module 1020 may be configured to perform at least one of the processing-related steps (e.g., steps S220 to S240, steps S420 to S440, step S920, but not limited thereto) performed by the terminal 101 in any of the above methods.

In some embodiments, the receiving module 1030 may be configured to receive third information. Optionally, the receiving module 1030 may be configured to perform at least one of the receiving-related steps (e.g., step S210, step S410, step S910, but not limited thereto) performed by the terminal 101 in any of the above methods.

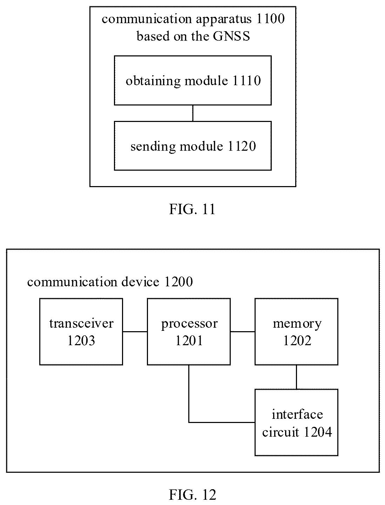

FIG. 11 is a schematic diagram of a communication apparatus based on a GNSS according to embodiments of the present invention. As shown in FIG. 11, the communication apparatus 1100 based on the GNSS may include at least one of an obtaining module 1110 or a sending module 1120.

In some embodiments, the obtaining module 1110 may be configured to obtain a result of a GNSS measurement autonomously performed by the terminal. Optionally, the obtaining module 1110 may be configured to perform at least one of the obtaining-related steps (e.g., steps S250 and S260, steps S520 and S530, step S620, step S810, step S940, but not limited thereto) performed by the network device 102 in any of the above methods.

In some embodiments, the sending module 1120 may be configured to send third information. Optionally, the sending module 1110 may be configured to perform at least one of the sending-related steps (e.g., step S210, step S510, step S910) performed by the network device 102 in any of the above methods.

FIG. 12 is a schematic diagram of a terminal according to embodiments of the present invention. The communication device 1200 may be a network device (e.g., an access network device, a core network device, etc.), or a terminal (e.g., a user equipment, etc.), or a chip, chip system or processor that supports a network device to implement any of the above methods, or a chip, chip system or processor that supports a terminal to implement any of the above communication methods. The communication device 1200 may be configured to implement the communication method as described in the above method embodiments, and for details, reference may be made to the description for the above method embodiments.

As shown in FIG. 12, the communication device 1200 includes one or more processors 1201. The processor 1201 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. The processor 1201 is configured to call instructions to cause the communication device 1200 to perform any of the above communication methods.

In some embodiments, the communication device 1200 further includes one or more memories 1202 for storing instructions. Optionally, all or part of the memories 1202 may also be set outside the communication device 1200.

In some embodiments, the communication device 1200 further includes one or more transceivers 1203. In a case where the communication device 1200 includes one or more transceivers 1203, the communication steps, such as sending and receiving steps, in the above methods are performed by the transceiver 1203, and the other steps are performed by the processor 1201.

In some embodiments, the transceiver may include a receiver and a transmitter, and the receiver and the transmitter may be separate or integrated together. Optionally, the terms such as transceiver, transceiver unit, transceiver machine, transceiver circuit, etc. are interchangeable, the terms such as transmitter, transmitting unit, transmitting machine, transmitting circuit, etc. are interchangeable, and the terms such as receiver, receiving unit, receiving machine, receiving circuit, etc. are interchangeable.

Optionally, the communication device 1200 further includes one or more interface circuits 1204, which are connected to the memory 1202. The interface circuit 1204 may be configured to receive signals from the memory 1202 or other devices, and send signals to the memory 1202 or other devices. For example, the interface circuit 1204 may read instructions stored in the memory 1202 and send the instructions to the processor 1201.

The communication device 1200 described in the above embodiments may be a network device or a terminal, but the scope of the communication device 1200 described in the present invention is not limited thereto, and the structure of the communication device 1200 may not be limited by FIG. 12. The communication device may be a stand-alone device or may be part of a larger device. For example, the communication device may be: (1) a stand-alone integrated circuit (IC), a chip, or a chip system or subsystem; (2) a set of one or more ICs, optionally, the set of ICs may also include a storage component for storing data and programs; (3) an ASIC, such as a Modem; (4) a module that may be embedded in other devices; (5) a receiver, a terminal, an intelligent terminal, a cellular phone, a wireless device, a handheld machine, a mobile unit, a vehicle-mounted device, a network device, a cloud device, an artificial intelligence device, etc.; (6) other devices.

The present invention also provides a storage medium having stored therein instructions that, when run on the communication device 1200, cause the communication device 1200 to perform any of the above communication methods. Optionally, the storage medium is an electronic storage medium. Optionally, the storage medium is a computer-readable storage medium, but it may also be a storage medium readable by other devices. Optionally, the storage medium may be a non-transitory storage medium, but it may also be a temporary storage medium.

The present invention also provides a program product that, when executed by the communication device 1200, causes the communication device 1200 to perform any of the above communication methods. Optionally, the program product is a computer program product.

The present invention also provides a computer program that, when run on a computer, causes the computer to execute any of the above communication methods.

Other embodiments of the present invention will be apparent to those skilled in the art from consideration of the specification and practice of the present invention here. The present invention is intended to cover any variations, uses, or adaptations of the present invention following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the specific construction that has been described above and illustrated in the accompanying drawings, and that various modifications and changes can be made without departing from the scope thereof. It is intended that the scope of the present invention only be limited by the appended claims.

## Claims

1. A communication method based on a global navigation satellite system (GNSS), performed by a terminal, and comprising:
indicating a result of a GNSS measurement autonomously performed by the terminal.

2. The method according to claim 1, wherein indicating the result of the GNSS measurement autonomously performed by the terminal comprises:
sending first information, wherein the first information indicates the result of the GNSS measurement autonomously performed by the terminal.

3. The method according to claim 2, wherein the first information is GNSS measurement result information; wherein the GNSS measurement result information has a first value, and indicates that the GNSS measurement autonomously performed by the terminal succeeds; or the GNSS measurement result information has a second value, and indicates that the GNSS measurement autonomously performed by the terminal fails.

4. The method according to claim 2, wherein the first information is GNSS validity duration information, and the GNSS validity duration information indicates a GNSS validity duration determined based on the GNSS measurement.

5. The method according to claim 2, wherein
in a case where a variation of a GNSS validity duration determined based on the GNSS measurement relative to a GNSS validity duration determined based on a previous GNSS measurement is less than a first threshold, the first information is GNSS measurement result information;
in a case where a variation of a GNSS validity duration determined based on the GNSS measurement relative to a GNSS validity duration determined based on a previous GNSS measurement is greater than or equal to a first threshold, the first information is GNSS validity duration information, wherein the GNSS validity duration information indicates the GNSS validity duration determined based on the GNSS measurement.

6. The method according to any one of claims 2 to 5, wherein the first information is carried on a physical random access channel (PRACH).

7. The method according to claim 1, wherein indicating the result of the GNSS measurement autonomously performed by the terminal further comprises:
not sending first information, indicating that the GNSS measurement autonomously performed by the terminal fails.

8. The method according to any one of claims 1 to 7, wherein before indicating the result of the GNSS measurement autonomously performed by the terminal, the method further comprises:
autonomously performing the GNSS measurement within a first duration.

9. The method according to claim 8, wherein indicating the result of the GNSS measurement autonomously performed by the terminal comprises at least one of:
indicating the result of the GNSS measurement autonomously performed by the terminal, at an end of a second duration which starts from an end moment of the first duration;
indicating the result of the GNSS measurement autonomously performed by the terminal, within a third duration which starts from an end moment of the first duration; or
indicating the result of the GNSS measurement autonomously performed by the terminal, within a fourth duration which starts from a moment when the GNSS measurement succeeds.

10. The method according to claim 8 or 9, further comprising:
starting a timer and performing the GNSS measurement after a GNSS validity duration expires, in a case where no second information is received until the end of the GNSS validity duration;
wherein the second information is used to trigger the terminal to perform the GNSS measurement, and the timer has the first duration.

11. The method according to any one of claims 1 to 10, wherein before starting the timer and performing the GNSS measurement, the method further comprises:
receiving third information, wherein the third information indicates that the terminal is allowed to autonomously perform the GNSS measurement.

12. A communication method based on a global navigation satellite system (GNSS), performed by a network device, and comprising:
obtaining a result of a GNSS measurement autonomously performed by a terminal.

13. The method according to claim 12, wherein obtaining the result of the GNSS measurement autonomously performed by the terminal comprises:
receiving first information, wherein the first information indicates the result of the GNSS measurement autonomously performed by the terminal; and
determining the result of the GNSS measurement autonomously performed by the terminal according to the first information.

14. The method according to claim 13, wherein the first information is GNSS measurement result information;
wherein the GNSS measurement result information has a first value, and indicates that the GNSS measurement autonomously performed by the terminal succeeds; or
the GNSS measurement result information has a second value, and indicates that the GNSS measurement autonomously performed by the terminal fails.

15. The method according to claim 13 or 14, wherein determining the result of the GNSS measurement autonomously performed by the terminal according to the first information comprises:
determining that the GNSS measurement autonomously performed by the terminal succeeds, in a case where the GNSS measurement result information has the first value;
determining that the GNSS measurement autonomously performed by the terminal fails, in a case where the GNSS measurement result information has the second value.

16. The method according to claim 13, wherein the first information is GNSS validity duration information, and the GNSS validity duration information indicates a GNSS validity duration determined based on the GNSS measurement.

17. The method according to claim 16, wherein determining the result of the GNSS measurement autonomously performed by the terminal according to the first information comprises:
determining that the GNSS measurement autonomously performed by the terminal succeeds, in a case where the GNSS validity duration information is received.

18. The method according to claim 17, wherein determining the result of the GNSS measurement autonomously performed by the terminal according to the first information further comprises:
determining that the GNSS measurement autonomously performed by the terminal fails, in a case where the GNSS validity duration is less than a second threshold;
determining that the GNSS measurement autonomously performed by the terminal succeeds, in a case where the GNSS validity duration is greater than or equal to a second threshold.

19. The method according to any one of claims 13 to 18, wherein the first information is carried on a physical random access channel (PRACH).

20. The method according to claim 12, wherein obtaining the result of the GNSS measurement autonomously performed by the terminal comprises:
determining that the GNSS measurement autonomously performed by the terminal fails, in a case where first information is not received.

21. The method according to any one of claims 12 to 20, wherein before obtaining the result of the GNSS measurement autonomously performed by the terminal, the method further comprises:
sending third information, wherein the third information indicates that the terminal is allowed to autonomously perform the GNSS measurement.

22. A communication apparatus based on a global navigation satellite system (GNSS), set in a terminal, and comprising:
an indication module, configured to indicate a result of a GNSS measurement autonomously performed by the terminal.

23. A communication apparatus based on a global navigation satellite system (GNSS), set in a network device, and comprising:
an obtaining module, configured to obtain a result of a GNSS measurement autonomously performed by a terminal.

24. A communication device, comprising:
at least one processor, configured to call instructions to perform the communication method according to any one of claims 1 to 21.

25. A communication system, comprising: a terminal and a network device, wherein the terminal is configured to perform the communication method according to any one of claims 1 to 11, and the network device is configured to perform the communication method according to any one of claims 12 to 21.

26. A storage medium having stored therein instructions that, when executed by a processor, cause the communication method according to any one of claims 1 to 21 to be performed.
